# EUROPÄISCHE PATENTSCHRIFT

(11) **EP 1 772 613 B1**
(45) Veröffentlichungstag und Bekanntmachung des Hinweises auf die Patenterteilung: **14.01.2009**
(21) Anmeldenummer: 06118530.2
(22) Anmeldetag: 07.08.2006
(51) Int. Cl.: F02M 31/135

(54) **Heizeinrichtung für Fluide**
Heating device for intake air
Dispositif de chauffage pour l'air d'alimentation

(30) Priorität: 11.08.2005 DE 202005012793 U
(43) Veröffentlichungstag der Anmeldung: 11.04.2007
(73) Patentinhaber: MANN+HUMMEL GmbH, 71638 Ludwigsburg (DE)
(72) Erfinder: Müller, Udo, 96529, Mengersgereuth-Hämmern (DE); Höhn, Peter, 96515, Sonneberg (DE)

(56) Entgegenhaltungen:
- EP-A- 0 367 631
- DE-A1- 10 325 965
- DE-U1- 29 904 032
- US-A- 4 325 344
- US-A- 4 347 826

## Beschreibung

Die Erfindung betrifft eine Heizeinrichtung für Fluide nach dem Oberbegriff des Patentanspruchs 1.

Es ist bekannt, durch ein Rohr strömende Fluide, insbesondere Gase, mittels am fluidführenden Rohr angeordneten Heizelementen zu beheizen.

Beispielsweise verhindern Heizeinrichtungen in Verbrennungsmotoren das Einfrieren des Blow-by-Gases aus dem Kurbelgehäuse an der Einströmstelle in das Saugsystem. Dieses durchströmende Blow-by-Gas ist ein explosives Gemisch, das vor allem aus Kraftstoffen, Ölen, Wasser und Luft besteht. Die DE 103 25 965 A1 beschreibt eine solche Heizeinrichtung für Fluide. Hierbei ist das Rohr als Profilrohr ausgeführt mit einer Abflachung, und die Heizeinheit wird mittels eines Steckers am Profilrohr befestigt. Am Heizelement sind zwei Anschlussfahnen befestigt, über die die elektrische Verbindung hergestellt wird. Die Anschlussfahnen weisen in Richtung der Abflachung, wobei das Heizelement über Federmittel in seiner Position fixiert wird. Die Richtung der Federkraft ist dabei dieselbe, wie die Fügerichtung des Steckers.

Die Aufgabe der Erfindung ist es, eine Heizeinrichtung für Fluide zu entwickeln, die einen geringen Platzbedarf aufweist, einfach aufgebaut ist und bei der eine sichere Kontaktierung des Heizelementes gewährleistet ist. Diese Aufgabe wird durch die Merkmale des Patentanspruchs 1 gelöst.

### Vorteile der Erfindung

Die erfindungsgemäße Heizeinrichtung für Fluide, insbesondere Gase, vorzugsweise Kurbelgehäuseentlüftungsgase, weist ein fluidführendes Rohr mit einem am fluidführenden Rohr angeordneten Heizelement auf. Das fluidführende Rohr kann dabei eine kreisrunde Querschnittsform aufweisen, ist jedoch bevorzugt an einer Längsseite leicht abgeflacht. Ebenso ist eine mehreckige Form denkbar, wie sie z. B. durch Strangpressen hergestellt werden kann. Das Heizelement ist hierbei mittels eines Steckers, welcher mit dem fluidführenden Rohr verbunden ist, über ein Federelement fixiert. Dabei wird der Stecker lösbar oder unlösbar mit dem fluidführenden Rohr verbunden, wodurch das Heizelement derart am fluidführenden Rohr platziert wird, dass eine direkte oder indirekte Aufheizung des fluidführenden Rohres erfolgt. Damit das Heizelement auch in einer vibrationsreichen Umgebung, wie z. B. beim Betrieb eines Kraftfahrzeuges, in seiner Position verbleibt, wird es über ein Federelement in seine Position verpresst. Erfindungsgemäß ist das Federelement zur Fixierung des Heizelementes in Bezug auf den Stecker derart positioniert, dass die Fügerichtung des Steckers beim Zusammenbau von Stecker und fluidführendem Rohr senkrecht zur Kraftrichtung, welche durch das Federelement ausgeübt wird, angeordnet ist. Durch die Entkopplung der Kraft, welche benötigt wird um den Stecker mit dem fluidführenden Rohr zu verbinden, und der Kraft, welche die Feder auf das Heizelement ausübt, ergibt sich der Vorteil, dass die Federkraft nicht durch die Fügekraft des Steckers beeinflusst wird. Der Stecker wird bevorzugt über ein Schweißver-fahren, Rastverfahren oder ein Klebverfahren mit dem fluidführenden Rohr verbunden, wobei die Ausführung der Verbindung keinen Einfluss auf die Federkraft und damit die Anpresskraft auf das Heizelement mehr hat. Im Umkehrschluss erfolgt somit in sehr vorteilhafter Weise auch keine Beeinflussung der Schweiß- oder Klebenaht zwischen Stecker und fluidführendem Rohr durch die Kraft, welche die Feder einerseits auf das Heizelement und andererseits auf das hierzu existierende Gegenlager ausübt. Das fluidführende Rohr weist dabei eine Art Einschubtasche für das Heizelement und das Federelement auf, wobei die Federkraft einzig alleine durch das fluidführende Rohr aufgenommen wird, und der Stecker unbelastet von der Federkraft mit dem fluidführenden Rohr verbunden werden kann.

Gemäß einer vorteilhaften Ausgestaltung der Erfindung ist das fluidführende Rohr vollständig mit einer nicht leitenden Ummantelung versehen. Aus dieser Ummantelung heraus wird zusätzlich die Tasche gebildet, in welcher das Heizelement und das Federelement aufgenommen werden. Weiterhin ist in dem Bereich des fluidführenden Rohres vorzugsweise eine Mulde in der Tasche angeordnet, in der das Heizelement angepasst werden kann. Das Heizelement berührt dabei das fluidführende Rohr nicht, da auch hier die nicht leitende Ummantelung vorgesehen ist. Die Form der Mulde ist bevorzugt kreisrund, kann jedoch auch jede weitere Form, sei es oval oder eckig, annehmen. Im Bereich der Mulde weist die Ummantelung nur eine sehr geringe Wandstärke auf, so dass die durch das Heizelement produzierte Hitze ohne einen großen Wärmeverlust auf das fluidführen-de Rohr übergehen kann. Da allerdings das fluidführende Rohr nun durch die Ummantelung vollständig vom Heizelement getrennt ist, bleibt das Heizelement frei von ölhaltigen Verschmutzungen, welche eventuell durch eine Art Kapillarwirkung zwischen fluidführendem Rohr und Ummantelung eingesogen werden können. Positiv ist hierbei die gegenüber dem Stand der Technik stark erhöhte Kurzschlusssicherheit und die damit verbundene erhöhte Funktionssicherheit der Heizeinrichtung.

In einer alternativen Ausgestaltung dazu ist das fluidführende Rohr wiederum mit einer nicht leitenden Ummantelung versehen, wobei jedoch im Bereich des Heizelementes eine Aussparung an der Ummantelung angeordnet ist. Hierbei wird das Heizelement exakt in der Aussparung der Ummantelung eingesetzt und berührt somit direkt das fluidführende Rohr, welches bevorzugt aus einem Metall, vorzugsweise aus Kupfer, gebildet ist. Hierdurch ergibt sich ein sehr guter Wärmeübergang im Bereich der Kontaktierung zwischen Heizelement und metallischem, fluidführendem Rohr, wobei darauf zu achten ist, dass die restliche Ummantelung möglichst dicht mit dem fluidführenden Rohr verbunden ist.

Besonders vorteilhaft ist es, wenn die Ummantelung aus Kunststoff, insbesondere aus glasfaserverstärktem Polyamid besteht. Diese Materialien sind einfach und leicht herzustellen und bevorzugt wird das fluidführende Rohr damit umspritzt. Die Lösung ist günstig und leicht, welches gerade für den Betrieb in einem Kraftfahrzeug von großer Bedeutung ist. Zusätzlich haben diese Materialien über einen großen Temperaturbereich gleichbleibende positive Eigenschaften.

Eine besondere Ausführungsform der Erfindung ist dadurch gekennzeichnet, dass das Heizelement ein PTC-Element ist. PTC-Elemente, oft auch Kaltleiter genannt, sind Halbleiterwiderstände, welche temperaturabhängig sind. Bei ansteigender Temperatur wird der Widerstandswert größer. Bei der Stromzuführung erwärmt sich das PTC-Element und hat durch die Widerstandskennlinie selbstregelnde Eigenschaften, wodurch eine Überhitzung verhindert wird. Die Beharrungstemperatur liegt in der Regel zwischen 60 °C und 120 °C, eine Abweichung nach oben oder unter kann sich aber in Abhängigkeit von PTC-Element, Volumenstrom, Temperatur und Isolierwirkung des Kunststoffes ergeben. Bevorzugt ist das PTC-Element derart angeordnet, dass es möglichst vollflächig am fluidführenden Rohr bzw. an der nicht leitenden Ummantelung des fluidführenden Rohres anliegt. Es lassen sich jedoch auch weitere in Stand der Technik mögliche Heizelemente denken, die für die Aufheizung der Heizeinrichtung sinnvoll einzusetzen sind.

Gemäß einer vorteilhaften Ausgestaltung der Erfindung ist das Heizelement im Stecker zwischen zwei Kontaktfahnen des Steckers angeordnet. Dieses ergibt eine äußerst effiziente Bauraumausnutzung, wodurch der Stecker klein und kompakt gebaut ist.

Eine besondere Ausführungsform der Erfindung ist dadurch gekennzeichnet, dass eine der Kontaktfahnen des Steckers gleichzeitig das Federelement bildet und sich in einer Steckeraufnahme der Ummantelung des fluidführenden Rohres abstützt. Durch diese Maßnahme lässt sich wiederum ein zusätzliches Bauteil einsparen, wodurch die Heizeinrichtung wiederum günstiger wird und eine einfache Bauform aufweist.

Alternativ hierzu ist in einer weiteren Ausgestaltung das Federelement zwischen einer Steckeraufnahme der Ummantelung und einer der Kontaktfahnen angeordnet. Dadurch erfolgt die Kraftabstützung des Federelements an der Innenwand der Ummantelung und wirkt auf eine der Kontaktfahnen des Steckers. Das Federelement kann hierbei eine ring-, tonnen- oder sonst wie geartete Feder oder auch ein Federring sein. Weiterhin ist z. B. auch ein elastisches Element aus leitendem Kunststoff denkbar.

In einer weiteren hierzu alternativen Ausgestaltung ist das Federelement zwischen einer der Kontaktfahnen und dem Heizelement angeordnet. Das Federelement kann wiederum alle im Stand der Technik bekannten Formen annehmen und übt hierbei einen direkten Druck auf das Heizelement aus. Eine vorteilhafte Ausgestaltung der Heizeinrichtung ist dadurch gekennzeichnet, dass der Anschlussstecker über ein Ultraschallschweißverfahren mit der Ummantelung unlösbar verbunden ist. Dieses hat den Vorteil, dass so eine dichtende Verbindung gegen schädliche Einflüsse von außerhalb, wie z. B. Feuchtigkeit oder aggressive Medien, wie sie im Kraftfahrzeug vorkommen, gewährleistet ist.

### Zeichnung

Weitere Einzelheiten der Erfindung werden in der Zeichnung anhand von schematischen Ausführungsbeispielen beschrieben. Hierbei zeigt
- Figur 1: einen Teil der Heizeinrichtung in isometrischer Ansicht,
- Figur 2: eine Heizeinrichtung im Teilschnitt und
- Figur 3: und Figur 4 jeweils alternative Ausgestaltungen der erfindungsgemäßen Heizeinrichtung.

### Beschreibung der Ausführungsbeispiele

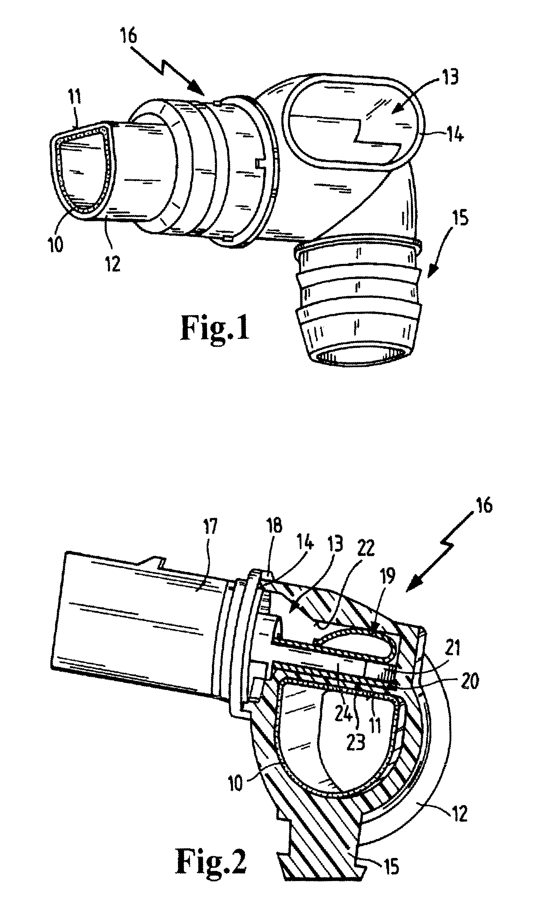

Figur 1 zeigt einen Teil der Heizeinrichtung in isometrischer Ansicht. Der dargestellte Teil der erfindungsgemäßen Heizeinrichtung besteht aus einem fluidführenden Rohr 10, welches bevorzugt aus Metall besteht, insbesondere Kupfer, und weist eine Abflachung 11 zu einer Seite hin auf. Weiterhin ist es mit einer nicht leitenden Kunststoffummantelung 12 umspritzt. Die Kunststoffummantelung 12 weist dabei einen 90° Winkel auf, wobei im Bereich des Winkels eine Steckeraufnahme 13 in der nicht leitenden Ummantelung 12 angeordnet ist. Die Steckeraufnahme weist axial nach außen hin eine umlaufende Verbindungsfläche 14 zur Aufnahme eines hier nicht dargestellten Steckers auf. Am Ende der nicht leitenden Kunststoffummantelung 12 ist eine Anschlusskontur 15 zur Aufnahme eines Schlauches oder eines Rohres angeordnet.

Die Figur 2 zeigt die vollständige Heizeinrichtung 16 im Teilschnitt. Der vorherigen Figur entsprechende Bauteile sind mit den gleichen Bezugszeichen versehen. Hier ist in die Steckeraufnahme 13 ein Stecker 17 eingesteckt, wobei Anlagekonturen 18 des Steckers 17 vollumfänglich an die umlaufende Verbindungsfläche 14 angelegt sind und somit für ein nichtlösbares Verbindungsverfahren, wie beispielsweise Laser-, Infrarot-, Reib- oder Spiegelschweißen sowie Kleben, vorbereitet sind. Die umlaufende Verbindungsfläche 14 und die Anlagekonturen 18 des Steckers 17 sind dabei korrespondierend zueinander ausgelegt. Es ist also auch möglich, hier ein Nut-Feder-System zu verwenden, wobei auf eine dichte Verbindung zwischen Stecker 17 und nicht leitender Kunststoffummantelung 12 zu sorgen ist. In den Stecker hinein führen hier nicht dargestellte elektrische Anschlüsse, welche mit Kontaktfahnen 19, 20 verbunden sind. Zwischen den Kontaktfahnen 19, 20 ist ein PTC-Element 21 als Heizelement angeordnet. Die erste Kontaktfahne 19 weist dabei eine bügelförmige Form auf, wodurch sie gleichzeitig ein Federelement zur Fixierung des PTC-Elementes bildet. Das durch die Kontaktfahne 19 gebildete Federelement liegt einerseits an einer Innenwand 22 des Steckers 17 an und drückt andererseits mit der Federkraft in Richtung und auf das PTC-Element 21. Dieses wird auf die zweite Kontaktfahne 20 gepresst, welche eine flächenartige Form weist, und weiterhin vollflächig auf einer Kontaktfläche 23 in der Ummantelung aufliegt. Durch das durch die Kontaktfahne 19 gebildete Federelement erfolgt also ein vollflächiger, funktionssicherer Kontakt zwischen PTC-Element 21, flächiger Kontaktfahne 20 und der Kontaktfläche in der Ummantelung 23. Zur seitlichen Fixierung des PTC-Elementes 21 weist der Stecker 17 zwei sich gegenüberliegende Fixierelemente 24 auf, welche das PTC-Element halten und seitlich, also quer zur Kraftrichtung des Federelementes fixieren. Diese sind bevorzugt einstückig aus dem Stecker 17 herausgebildet. Die Kontaktfläche 23 in der Ummantelung 12 ist bevorzugt sehr dünn ausgeführt, sodass ein guter und rascher Wärmeübergang zwischen PTC-Element 21 und fluidführendem Rohr 10 erfolgen kann. Hier ist schön zu erkennen, dass die Kraftwirkung des durch die Kontaktfahne 19 gebildeten Federelementes und die Füge- und Verbindungsrichtung des Steckers 17 in Bezug auf die nicht leitende Ummantelung 12 in einem Winkel von ungefähr 90° aufeinander stehen, so dass keine gegenseitige Beeinflussung stattfindet.

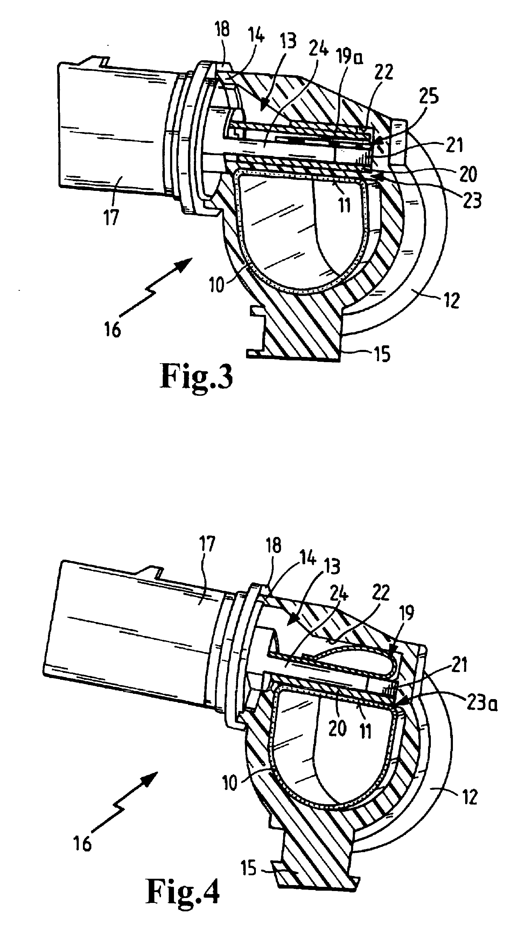

Die Figur 3 zeigt eine alternative Ausgestaltung der Heizeinrichtung 16. Den vorherigen Figuren entsprechende Bauteile sind mit den gleichen Bezugszeichen versehen. Im Unterschied zur vorherigen Heizeinrichtung 16 weist das Ende der Kontaktfahne 19a eine im wesentlichen ähnliche projizierte Fläche wie das PTC-Element 21 auf, wobei zwischen Kontaktfahne 19a und PTC-Element 21 ein Federelement 25 angeordnet ist. Dieses Federelement 25 drückt auf der einen Seite die Kontaktfahne 19a an die Innenwand 22 der Steckeraufnahme 13 und auf der anderen Seite das PTC-Element 21 über die Kontaktfahne 20 an die Kontaktfläche 23 in der Ummantelung. Auch hier ist die Kraftrichtung wieder quer zur Fügerichtung zwischen Stecker 17 und nicht leitender Ummantelung 12, nur sind hier Kontaktfahne 19a und Federelement 25 als separate Bauteile ausgeführt. Das Federelement kann dabei beispielsweise eine Federscheibe eine Druckfeder, eine Kegelfeder oder eine Ringfeder sein.

Die Figur 4 zeigt eine weitere Variante der Heizeinrichtung 16. Den vorherigen Figuren entsprechende Bauteile sind mit den gleichen Bezugszeichen versehen. Bei dieser Variante weist die nicht leitende Kunststoffummantelung 12 des fluidführenden Rohres 10 im Bereich der Kontaktfahne 20 eine Aussparung auf, sodass die Kontaktfahne 20 direkt über eine Kontaktfläche 23a mit dem fluidführenden Rohr 10 in Kontakt steht. Dadurch lässt sich die vom PTC-Element abgegebene Wärme einfach und direkt über die Kontaktfahne 20 an das fluidführende Rohr 10 weitergeben. Was allen Ausgestaltungen gemeinsam ist, ist zusätzlich der Vorteil der niedrigen Bauhöhe des Gesamtsystems, da der Stecker 17 nicht von oben auf das fluidführende Rohr 10 aufgesetzt sondern seitlich herangeführt wird. Dadurch erfolgt einerseits die schon erwähnte Trennung von Fügerichtung und Druckrichtung der Feder und andererseits wird so der Platzbedarf des Systems der Kontaktfahnen und des PTC-Elementes stark verringert. Gerade erst durch die seitliche Anbringung des Steckers lässt sich die übereinander liegende Anordnung von Kontaktfahren und PTC-Element ermöglichen, was im Stand der Technik gemeinhin nebeneinander erfolgen muss, wodurch auch eine größere Steckerbreite erforderlich war.

## Patentansprüche

1. Heizeinrichtung für Fluide, insbesondere Gase vorzugsweise Kurbelgehäuseentlüftungsgase, mit einem das Fluid führenden Rohr (10), und einem im Bereich des fluidführenden Rohres (10) angeordneten Heizelement (21), wobei das Heizelement (21) mittels eines Steckers (17), welcher mit dem fluidführenden Rohr (10) verbunden ist, über ein Federelement (19) am fluidführenden Rohr (10) fixiert ist, **dadurch gekennzeichnet, dass** das Federelement (19) in Bezug auf den Stecker (17) derart angeordnet ist, dass die Fügerichtung des Steckers (17) senkrecht zur Kraftrichtung des Federelementes (19) ausgerichtet ist.

2. Heizeinrichtung nach Anspruch 1, **dadurch gekennzeichnet, dass** das fluidführende Rohr vollständig mit einer nicht leitenden Ummantelung versehen ist.

3. Heizeinrichtung nach Anspruch 1, **dadurch gekennzeichnet, dass** das fluidführende Rohr mit einer nicht leitenden Ummantelung versehen ist, wobei im Bereich des Heizelementes eine Aussparung in der Ummantelung angeordnet ist.

4. Heizeinrichtung nach einem der Ansprüche 2 oder 3, **dadurch gekennzeichnet, dass** die Ummantelung aus Kunststoff, insbesondere aus glasfaserverstärktem Polyamid besteht.

5. Heizeinrichtung nach einem der vorhergehenden Ansprüche, **dadurch gekennzeichnet, dass** das Heizelement ein PTC-Element ist. -

6. Heizeinrichtung nach einem der vorhergehenden Ansprüche, **dadurch gekennzeichnet, dass** das Heizelement im Stecker zwischen zwei Kontaktfahnen des Steckers angeordnet ist.

7. Heizeinrichtung nach Anspruch 6, **dadurch gekennzeichnet, dass** eine Kontaktfahne gleichzeitig das Federelement bildet und sich in einer Steckeraufnahme der Ummantelung abstützt.

8. Heizeinrichtung nach Anspruch 6, **dadurch gekennzeichnet, dass** das Federelement zwischen der Steckeraufnahme der Ummantelung und einer der Kontaktfahnen angeordnet ist.

9. Heizeinrichtung nach Anspruch 6, **dadurch gekennzeichnet, dass** das Federelement zwischen einer der Kontaktfahnen und dem Heizelement angeordnet ist.

10. Heizeinrichtung nach einem der vorhergehenden Ansprüche, **dadurch gekennzeichnet, dass** der Stecker über ein Schweißverfahren mit der Ummantelung unlösbar verbunden ist.

## Claims

1. Heating device for fluids, especially gases, preferably crankcase venting gases, with a fluid-transporting pipe (10), and a heating element (21) arranged near the fluid-transporting pipe (10), with the heating element (21) being fixed via a spring element (19) to the fluid-transporting pipe (10) by means of a connector (17) which is connected with the fluid-transporting pipe (10), **characterized in that** the spring element (19) being arranged in relation to the connector (17) in such a way that the connecting direction of the connector is adjusted vertically to the force direction of the spring element (19).

2. Heating device according to claim 1, **characterized in that** the fluid-transporting pipe is completely provided with a non-conducting jacket.

3. Heating device according to claim 1, **characterized in that** the fluid-transporting pipe is provided with a non-conducting jacket, with a cut-out near the heating element being disposed in the jacket.

4. Heating device according to one of the claims 2 or 3, **characterized in that** the jacket consists of plastic, in particular of fiberglass-reinforced polyamide.

5. Heating device according to one of the above-mentioned claims, **characterized in that** the heating element is a PTC element.

6. Heating device according to one of the above-mentioned claims, **characterized in that** the heating element in the connector is disposed between two contact tabs of the connector.

7. Heating device according to claim 6, **characterized in that** one contact tab forms the spring element and at the same time is supported in a connector fixing of the jacket.

8. Heating device according to claim 6, **characterized in that** the spring element is located between the connector fixing of the jacket and one of the contact tabs.

9. Heating device according to claim 6, **characterized in that** the spring element is located between one of the contact tabs and the heating element.

10. Heating device according to one of the above-mentioned claims, **characterized in that** the connector is connected non-detachably with the jacket by means of a welding process.

## Revendications

1. Dispositif de chauffage pour des fluides, en particulier des gaz, de préférence des gaz d'échappement du carter de moteur, avec un tube (10) conducteur de fluide et un élément chauffant (21) placé au niveau du tube (10) conducteur de fluide, l'élément chauffant (21) étant fixé sur le tube (10) conducteur de fluide par l'intermédiaire d'un élément à ressort (19) et au moyen d'une fiche (17) qui est reliée au tube (10) conducteur de fluide, **caractérisé en ce que** l'élément à ressort (11) est placé, par rapport à la fiche (17), de telle manière que la direction de jonction de la fiche (17) est dirigée perpendiculairement à la direction de la force de l'élément à ressort (19).

2. Dispositif de chauffage selon la revendication 1, **caractérisé en ce que** le tube conducteur de fluide est muni entièrement d'une gaine non conductrice.

3. Dispositif de chauffage selon la revendication 1, **caractérisé en ce que** le tube conducteur de fluide est muni d'une gaine non conductrice, un évidement étant placé dans la gaine au niveau de l'élément chauffant.

4. Dispositif de chauffage selon l'une des revendications 2 ou 3, **caractérisé en ce que** la gaine est constituée d'une matière plastique, en particulier de polyamide renforcé par des fibres de verre.

5. Dispositif de chauffage selon l'une des revendications précédentes, **caractérisé en ce que** l'élément chauffant est un élément PTC.

6. Dispositif de chauffage selon l'une des revendications précédentes, **caractérisé en ce que** l'élément chauffant est placé dans la fiche entre deux lames de contact de la fiche.

7. Dispositif de chauffage selon la revendication 6, **caractérisé en ce qu'**une lames de contact forme simultanément l'élément à ressort et s'appuie dans un logement de fiche de la gaine.

8. Dispositif de chauffage selon la revendication 6, **caractérisé en ce que** l'élément à ressort est placé entre le logement de fiche de la gaine et l'une des lames de contact.

9. Dispositif de chauffage selon la revendication 6, **caractérisé en ce que** l'élément à ressort est placé entre l'une des lames de contact et l'élément chauffant.

10. Dispositif de chauffage selon l'une des revendications précédentes, **caractérisé en ce que** la fiche est reliée à la gaine de manière inamovible par un procédé de soudage.
